# EUROPEAN PATENT APPLICATION

(11) **EP 3 809 632 A1**
(43) Date of publication of application: **21.04.2021**
(21) Application number: 19847305.0
(22) Date of filing: 12.07.2019
(51) Int. Cl.: H04L 12/24

(54) **DATA TRANSMISSION METHOD AND DEVICE**

(30) Priority: 10.08.2018 CN 201810910095
(71) Applicant: HUAWEI TECHNOLOGIES CO., LTD., Shenzhen, Guangdong 518129 (CN)
(72) Inventor: ZHANG, Bo, Shenzhen, Guangdong 518129 (CN); WU, Rong, Shenzhen, Guangdong 518129 (CN); TAN, Shuaishuai, Shenzhen, Guangdong 518129 (CN)
(74) Representative: Grünecker Patent- und Rechtsanwälte PartG mbB
(86) International application number: PCT/CN2019/095731
(87) International publication number: WO 2020/029745

(57) **Abstract**

Embodiments of this application provide a data transmission method and a device. The data transmission method includes: performing integrity protection on to-be-sent data, to generate a PDCP data packet, where the PDCP data packet includes identification information and integrity protection information, the identification information is at least used to indicate that integrity protection is performed on data carried in the PDCP data packet, and the integrity protection information is used to perform integrity check on the data carried in the PDCP data packet; and sending the PDCP data packet. According to the data transmission method provided in the embodiments of this application, integrity protection is performed on the data carried in the PDCP data packet, and an indication is given by using the identification information, thereby improving data transmission security.

## Description

This application claims priority to Chinese Patent Application No. 201810910095.9, filed with the China National Intellectual Property Administration on August 10, 2018 and entitled "DATA TRANSMISSION METHOD AND DEVICE", which is incorporated herein by reference in its entirety.

### TECHNICAL FIELD

Embodiments of this application relate to the field of communications technologies, and in particular, to a data transmission method and a device.

### BACKGROUND

In a long term evolution (long term evolution, LTE) communications network, only confidentiality protection is supported for user plane data transmitted through an air interface between a terminal device and a network device.

For uplink data transmission, the terminal device encrypts the user plane data by using an encryption key and an encryption algorithm, and sends the encrypted data to the network device. Correspondingly, the network device decrypts a ciphertext by using the same key, to obtain the user plane data. For downlink data transmission, the network device encrypts the user plane data by using an encryption key and an encryption algorithm, and sends the encrypted data to the terminal device. Correspondingly, the terminal device decrypts a ciphertext by using the same key, to obtain the user plane data.

However, in some attack scenarios, an attacker may intercept encrypted data transmitted through an air interface, and the like. In an example of uplink data transmission, the attacker may replace the encrypted data with malicious data, and send the malicious data to the network device. The network device may decrypt the malicious data, and continue a communication procedure. This causes a malicious threat to the terminal device and the network device, resulting in poor communication security.

### SUMMARY

Embodiments of this application provide a data transmission method and a device, to improve data transmission security.

According to a first aspect, an embodiment of this application provides a data transmission method. The method includes: performing integrity protection on to-be-sent data, to generate a PDCP data packet, where the PDCP data packet includes identification information and integrity protection information, the identification information is at least used to indicate that integrity protection is performed on data carried in the PDCP data packet, and the integrity protection information is used to perform integrity check on the data carried in the PDCP data packet; and sending the PDCP data packet.

According to the data transmission method provided in the first aspect, a transmit end device performs integrity protection on the data carried in the PDCP data packet, and gives an indication by using the identification information, to implement integrity protection on user plane data transmitted through an air interface, so as to identify whether the data is correct, and accurately identify whether the data is replaced or tampered with. Therefore, a risk that the data is attacked is reduced, and data transmission security is improved.

Optionally, in a possible implementation of the first aspect, the identification information includes at least one of the following: first identification information, second identification information, and third identification information. The first identification information is used to indicate that integrity protection is performed on the data carried in the PDCP data packet. The second identification information is used to indicate a length of the integrity protection information. The third identification information is used to indicate a length of a key used to generate the integrity protection information.

According to the data transmission method provided in this possible implementation, the first identification information is used to clearly indicate that integrity protection is performed on the data carried in the PDCP data packet, and this is simple and easy to implement. The second identification information is used to indicate the length of the integrity protection information, and the length is variable, so as to improve integrity protection flexibility. The third identification information is used to indicate the length of the key, and the length is variable, so as to improve integrity protection flexibility.

Optionally, in a possible implementation of the first aspect, the identification information is included in a reserved field in the PDCP data packet, or the identification information is included in a new field in the PDCP data packet.

Optionally, in a possible implementation of the first aspect, before the performing integrity protection on to-be-sent data, to generate a PDCP data packet, the method further includes: determining, based on an integrity protection determining policy, that a type of the to-be-sent data is a type of data on which integrity protection needs to be performed.

Optionally, in a possible implementation of the first aspect, the integrity protection determining policy is a locally prestored determining policy; or the integrity protection determining policy is received from another device in a communications system; or the integrity protection determining policy is determined based on at least one determining policy. The at least one determining policy includes at least one of the following: a locally prestored determining policy and a determining policy prestored in another device in a communications system.

Optionally, in a possible implementation of the first aspect, the performing integrity protection on to-be-sent data includes: performing integrity protection on the to-be-sent data; or performing integrity protection on the to-be-sent data and the identification information.

According to a second aspect, an embodiment of this application provides a data transmission method. The method includes: receiving a PDCP data packet; and if the PDCP data packet includes identification information and integrity protection information, performing, based on the identification information and the integrity protection information, integrity check on data carried in the PDCP data packet, where the identification information is at least used to indicate that integrity protection is performed on the data carried in the PDCP data packet, and the integrity protection information is used to perform integrity check on the data carried in the PDCP data packet.

According to the data transmission method provided in the second aspect, after receiving the PDCP data packet, a receive end device may determine, based on whether the PDCP data packet carries the identification information, whether integrity protection is performed on the PDCP data packet. When integrity protection is performed, integrity check may be performed on the data carried in the PDCP data packet, based on the identification information and the integrity protection information, to identify whether the data is correct, and accurately identify whether the data is replaced or tampered with. Therefore, a risk that the data is attacked is reduced, and data transmission security is improved.

Optionally, in a possible implementation of the second aspect, the method further includes: determining a sending time window, where the sending time window is used to indicate that integrity protection needs to be performed on data that is sent to a first device within the sending time window, and the first device is a device sending the PDCP data packet.

Optionally, in a possible implementation of the second aspect, the identification information includes at least one of the following: first identification information, second identification information, and third identification information. The first identification information is used to indicate that integrity protection is performed on the data carried in the PDCP data packet. The second identification information is used to indicate a length of the integrity protection information. The third identification information is used to indicate a length of a key used to generate the integrity protection information.

Optionally, in a possible implementation of the second aspect, the identification information is included in a reserved field in the PDCP data packet, or the identification information is included in a new field in the PDCP data packet.

Optionally, in a possible implementation of the second aspect, the performing integrity check on data carried in the PDCP data packet includes: performing integrity check on the data carried in the PDCP data packet; or performing integrity check on the data carried in the PDCP data packet and the identification information.

According to a third aspect, an embodiment of this application provides a communications device. The communications device includes: a processing module, configured to perform integrity protection on to-be-sent data, to generate a PDCP data packet, where the PDCP data packet includes identification information and integrity protection information, the identification information is at least used to indicate that integrity protection is performed on data carried in the PDCP data packet, and the integrity protection information is used to perform integrity check on the data carried in the PDCP data packet; and a transceiver module, configured to send the PDCP data packet.

Optionally, in a possible implementation of the third aspect, the identification information includes at least one of the following: first identification information, second identification information, and third identification information. The first identification information is used to indicate that integrity protection is performed on the data carried in the PDCP data packet. The second identification information is used to indicate a length of the integrity protection information. The third identification information is used to indicate a length of a key used to generate the integrity protection information.

Optionally, in a possible implementation of the third aspect, the identification information is included in a reserved field in the PDCP data packet, or the identification information is included in a new field in the PDCP data packet.

Optionally, in a possible implementation of the third aspect, the processing module is further configured to determine, based on an integrity protection determining policy, that a type of the to-be-sent data is a type of data on which integrity protection needs to be performed.

Optionally, in a possible implementation of the third aspect, the integrity protection determining policy is a locally prestored determining policy; or the integrity protection determining policy is received by the transceiver module from another device in a communications system; or the integrity protection determining policy is determined by the processing module based on at least one determining policy. The at least one determining policy includes at least one of the following: a locally prestored determining policy and a determining policy prestored in another device in a communications system.

Optionally, in a possible implementation of the third aspect, the processing module is specifically configured to: perform integrity protection on the to-be-sent data; or perform integrity protection on the to-be-sent data and the identification information.

According to a fourth aspect, an embodiment of this application provides a communications device. The communications device includes: a transceiver module, configured to receive a PDCP data packet; and a processing module, configured to: if the PDCP data packet includes identification information and integrity protection information, perform, based on the identification information and the integrity protection information, integrity check on data carried in the PDCP data packet. The identification information is at least used to indicate that integrity protection is performed on the data carried in the PDCP data packet. The integrity protection information is used to perform integrity check on the data carried in the PDCP data packet.

Optionally, in a possible implementation of the fourth aspect, the processing module is further configured to determine a sending time window. The sending time window is used to indicate that integrity protection needs to be performed on data that is sent to a first device within the sending time window. The first device is a device sending the PDCP data packet.

Optionally, in a possible implementation of the fourth aspect, the identification information includes at least one of the following: first identification information, second identification information, and third identification information. The first identification information is used to indicate that integrity protection is performed on the data carried in the PDCP data packet. The second identification information is used to indicate a length of the integrity protection information. The third identification information is used to indicate a length of a key used to generate the integrity protection information.

Optionally, in a possible implementation of the fourth aspect, the identification information is included in a reserved field in the PDCP data packet, or the identification information is included in a new field in the PDCP data packet.

Optionally, in a possible implementation of the fourth aspect, the processing module is specifically configured to: perform integrity check on the data carried in the PDCP data packet; or perform integrity check on the data carried in the PDCP data packet and the identification information.

According to a fifth aspect, an embodiment of this application provides a communications device. The communications device includes a processor, a memory, and a transceiver. The memory is configured to store an instruction. The transceiver is configured to communicate with another device. The processor is configured to execute the instruction stored in the memory, so that the communications device performs the data transmission method provided in any one of the implementations of the first aspect or the second aspect.

According to a sixth aspect, an embodiment of this application provides a storage medium, including a readable storage medium and a computer program. The computer program is used to implement the data transmission method provided in any one of the implementations of the first aspect or the second aspect.

According to a seventh aspect, an embodiment of this application provides a program product. The program product includes a computer program (namely, an execution command). The computer program is stored in a readable storage medium. A processor may read the computer program from the readable storage medium, and execute the computer program to perform the data transmission method provided in any one of the implementations of the first aspect or the second aspect.

According to the data transmission method and the device that are provided in the embodiments of this application, integrity protection is performed on the data carried in the PDCP data packet, and an indication is given by using the identification information, to implement integrity protection on user plane data transmitted through an air interface, so as to identify whether the data is correct, and accurately identify whether the data is replaced or tampered with. Therefore, a risk that the data is attacked is reduced, and data transmission security is improved.

### BRIEF DESCRIPTION OF DRAWINGS

FIG. 1 is an architectural diagram of a communications system to which an embodiment of this application is applicable;
FIG. 2 is a message interaction diagram of a data transmission method according to a first embodiment of this application;
FIG. 3A is a schematic structural diagram of an existing PDCP data packet with a reserved bit;
FIG. 3B is a schematic structural diagram of a PDCP data packet with a reserved bit used as identification information according to an embodiment of this application;
FIG. 3C is a schematic structural diagram of an existing PDCP data packet without a reserved bit;
FIG. 3D is another schematic structural diagram of an existing PDCP data packet without a reserved bit;
FIG. 4 is a flowchart of a data transmission method according to a second embodiment of this application;
FIG. 5 is a schematic structural diagram of a communications device according to a first embodiment of this application; and
FIG. 6 is a schematic structural diagram of a communications device according to a second embodiment of this application.

### DESCRIPTION OF EMBODIMENTS

A data transmission method and a device provided in the embodiments of this application may be applied to a communications system using a packet data convergence protocol (Packet Data Convergence Protocol, PDCP). The communications system may perform wireless communication, or may perform wired communication. For example, the communications system may be a long term evolution (long term evolution, LTE) communications system or a subsequent evolved communications system, a future 5G communications system, or another communications system.

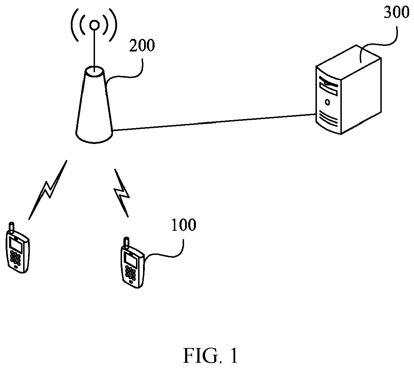

For example, FIG. 1 is an architectural diagram of a communications system to which an embodiment of this application is applicable. As shown in FIG. 1, the communications system may include a terminal device 100, a network device 200, and a core network device 300. Uplink and downlink communication may be performed between the terminal device 100 and the network device 200 through an air interface. Uplink and downlink communication may be performed between the terminal device 100 and the core network device 300 by using the network device 200.

The terminal device 100 in this embodiment of this application may be, for example, a mobile phone, a tablet computer, a handheld device, a vehicle-mounted device, a wearable device, a computing device, an internet of things device, or a mobile station (mobile station, MS) or a terminal device (terminal) in various forms that has a wireless connection function. This is not limited in this embodiment of this application.

The network device 200 in this embodiment of this application may be any device that may manage wireless network resources, or various wireless access points, for example, an evolved NodeB (evolutional node B, eNB or eNodeB), a relay node, or an access point in an LTE communications system, a 5G NodeB (g node B, gNB), or a next node (next node, NX) in a future 5G communications system. This is not limited in this embodiment of this application.

In addition, if a PDCP protocol is applied to a wired communications system, the terminal device 100 and the network device 200 in this embodiment of this application may be devices in the wired communications system. For example, the terminal device 100 may be a computer or a server, and the network device 200 may be a computer, a server, or a router. This is not limited in this embodiment of this application.

The core network device 300 in this embodiment of this application may include a mobility management network element, a data management network element, a policy management network element, and a service network element. The mobility management network element may be responsible for mobility access management, security key derivation, and the like. The data management network element may store user subscription data. The policy management network element may store a determining policy used to determine whether integrity protection is performed. The service network element is a service-related entity device. Specific implementation of each network element is not limited in this embodiment, and may vary with a communications system. For example, the mobility management network element may be a mobility management entity (Mobility Management Entity, MME), the data management network element may be a home subscriber server (Home Subscriber Server, HSS), the policy management network element may be a policy control function (Policy control function, PCF), and the service network element may be an application function (Application function, AF) or a service server.

It should be noted that, in some embodiments of this application, the terminal device 100 and the network device 200 may also be referred to as communications devices.

The following describes the technical solutions of this application in detail by using specific embodiments. The following several specific embodiments may be combined with each other, and a same or similar concept or process may not be described repeatedly in some embodiments.

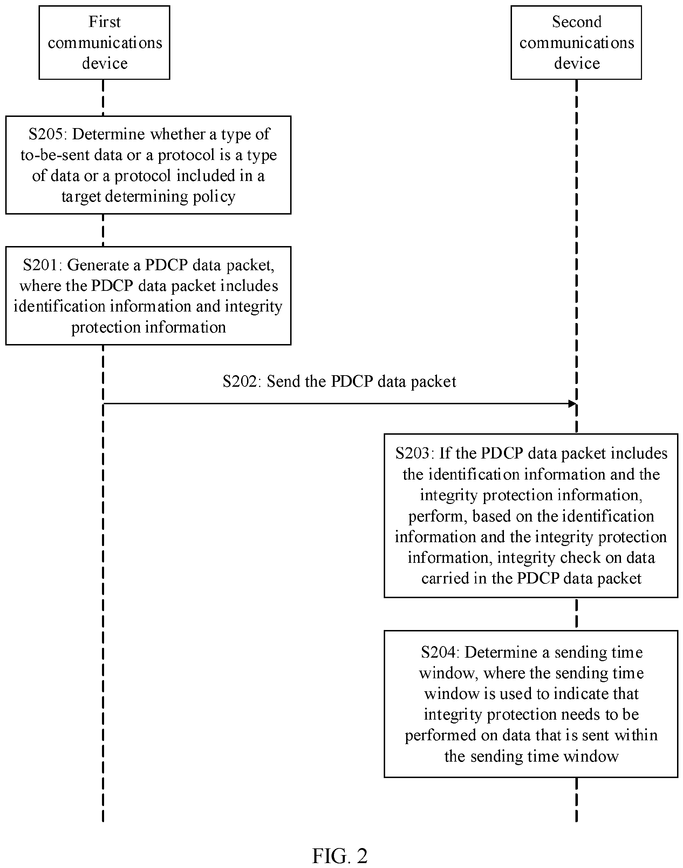

FIG. 2 is a message interaction diagram of a data transmission method according to a first embodiment of this application. The data transmission method provided in this embodiment is executed by a first communications device and a second communications device. The communications device may include a terminal device or a network device. Optionally, the first communications device may be a terminal device, and the second communications device may be a network device. In this case, the first communications device may send uplink data to the second communications device, and receive downlink data sent by the second communications device. Optionally, the first communications device may be a network device, and the second communications device may be a terminal device. In this case, the first communications device may send downlink data to the second communications device, and receive uplink data sent by the second communications device. As shown in FIG. 2, the data transmission method provided in this embodiment may include the following steps.

S201: The first communications device performs integrity protection on to-be-sent data, to generate a PDCP data packet.

The PDCP data packet includes identification information and integrity protection information. The identification information is used to indicate that integrity protection is performed on data carried in the PDCP data packet. The integrity protection information is at least used to indicate that integrity check is performed on the data carried in the PDCP data packet.

Specifically, the PDCP data packet includes the data, the identification information, and the integrity protection information. Integrity protection is performed on the data, and an indication is given by using the identification information, to implement integrity protection on user plane data transmitted through an air interface.

It should be noted that an integrity protection algorithm is not limited in this embodiment, for example, an integrity protection algorithm used in an existing communications system.

Optionally, in an implementation, the integrity protection information is generated to perform integrity protection on the data carried in the PDCP data packet.

Optionally, in another implementation, the integrity protection information is generated to perform integrity protection on the identification information and the data carried in the PDCP data packet.

Optionally, in another implementation, the integrity protection information is generated to perform integrity protection on the identification information, a sequence number, and the data carried in the PDCP data packet.

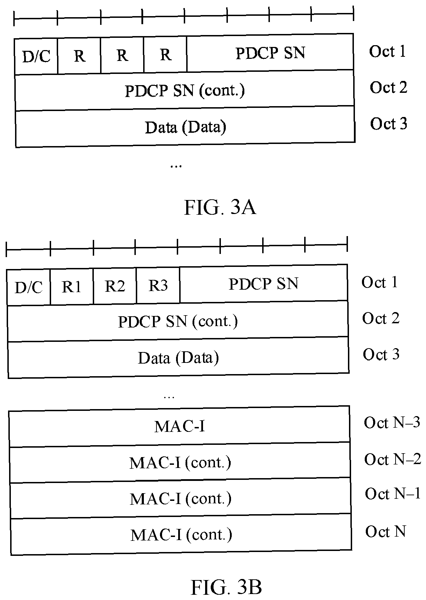

For the sequence number, refer to the following descriptions in FIG. 3A to FIG. 3D. Details are not described herein.

S202: The first communications device sends the PDCP data packet to the second communications device.

Correspondingly, the second communications device receives the PDCP data packet sent by the first communications device.

S203: If the PDCP data packet includes the identification information and the integrity protection information, the second communications device performs, based on the identification information and the integrity protection information, integrity check on the data carried in the PDCP data packet.

It can be learned that, according to the data transmission method provided in this embodiment, the first communications device performs integrity protection on the data carried in the PDCP data packet, and gives an indication by using the identification information, to implement integrity protection on user plane data transmitted through an air interface. After receiving the PDCP data packet, the second communications device may determine, based on whether the PDCP data packet carries the identification information, whether integrity protection is performed on the PDCP data packet. When integrity protection is performed, integrity check may be performed on the data carried in the PDCP data packet, based on the identification information and the integrity protection information, to identify whether the data is correct, and accurately identify whether the data is replaced or tampered with. Therefore, a risk that the data is attacked is reduced, and data transmission security is improved.

Optionally, the data transmission method provided in this embodiment may further include:

If the PDCP data packet does not include the identification information, or the PDCP data packet includes the identification information, but does not include the integrity protection information, the second communications device discards the PDCP data packet.

Optionally, the identification information may include first identification information. The first identification information is used to indicate that integrity protection is performed on data carried in the PDCP data packet.

The first identification information is used to clearly indicate that integrity protection is performed on the data carried in the PDCP data packet, and this is simple and easy to implement.

Optionally, the identification information may include second identification information. The second identification information is used to indicate a length of the integrity protection information.

The second identification information may be used to determine that the PDCP data packet includes the integrity protection information, and may be used to determine the length of the integrity protection information. In this case, the second identification information is used to implicitly indicate that integrity protection is performed on the data carried in the PDCP data packet. The second identification information is used to indicate the length of the integrity protection information, and the length is variable, so as to improve integrity protection flexibility.

It should be noted that a specific value of the length of the integrity protection information is not limited in this embodiment, for example, 32 bits, 64 bits, 96 bits, or 128 bits.

Optionally, the identification information may include third identification information. The third identification information is used to indicate a length of a key used to generate the integrity protection information.

The third identification information may be used to determine that the PDCP data packet includes the integrity protection information, and may be used to determine the length of the key used to generate the integrity protection information. In this case, the third identification information is used to implicitly indicate that integrity protection is performed on the data carried in the PDCP data packet. The third identification information is used to indicate the length of the key, and the length is variable, so as to improve integrity protection flexibility.

It should be noted that a specific value of the length of the key is not limited in this embodiment, for example, 64 bits, 128 bits, 192 bits, or 256 bits.

Optionally, the identification information may include at least one of the first identification, the second identification, and the third identification information.

Specifically, if the identification information includes only the first identification information, the length of the integrity protection information and the length of the key used to generate the integrity protection information may be preset values. The preset value is not specifically limited in this embodiment. If the identification information includes the second identification information, the length of the integrity protection information may be set flexibly. If the identification information includes the third identification information, the length of the key may be set flexibly.

It should be noted that locations of the first identification information, the second identification information, and the third identification information in the PDCP data packet and lengths of bits occupied by the first identification information, the second identification information, and the third identification information are not limited in this embodiment, and are set as required.

Optionally, the first identification information, the second identification information, and the third identification information may occupy reserved bits in the PDCP data packet.

The reserved bit in the PDCP data packet is used as the identification information, so that a length of the PDCP data packet does not need to be increased, thereby saving air interface resources and improving data transmission efficiency.

The following provides a detailed description by using an example.

FIG. 3A is a schematic structural diagram of an existing PDCP data packet with a reserved bit. FIG. 3B is a schematic structural diagram of a PDCP data packet with a reserved bit used as identification information according to an embodiment of this application. Meanings of fields are as follows.

D/C: 1 bit. When the D/C is set to 0, it indicates that the PDCP data packet is a control plane protocol data unit (Protocol Data Unit, PDU). When the D/C is set to 1, it indicates that the PDCP data packet is a user plane PDU.

R: a reserved bit, which is set to 0. Parameters that are not defined in a current communication standard may be defined as required. The reserved bit is ignored in an operation.

SN: a sequence number (Sequence Number, SN). The SN is specifically a sequence number of the PDCP data packet.

Data: data (or referred to as a message) carried in the PDCP data packet.

MAC-I: message authentication code-integrity (message authentication code-integrity, MAC-I), which is also referred to as integrity protection information. Parameters that are generated after integrity protection is performed are attached to the protected data (messages).

As shown in FIG. 3A, a length of the SN is 12 bits. A reserved field includes three reserved bits R, which are 3 bits in total. As shown in FIG. 3B, the PDCP data packet includes the integrity protection information (MAC-I). For example, the MAC-I is 32 bits. The identification information may occupy at least one of the three reserved bits R. For ease of description, the three reserved bits R may be respectively marked as R1, R2, and R3.

In an example, the identification information is first identification information. The first identification information may be 1 bit, which is any one of the three reserved bits R. The reserved bit R is defined as 0 or 1, and is used to indicate that integrity protection is performed on the data carried in the PDCP data packet.

In another example, the identification information is second identification information. The second identification information may be 1 bit, which is any one of the three reserved bits R. The reserved bit R is defined as 0 or 1, and is used to indicate a length of the integrity protection information. For example, the length of the integrity protection information may include 32 bits and 64 bits. When R is equal to 0, the length of the integrity protection information is 32 bits. When R is equal to 1, the length of the integrity protection information is 64 bits. For another example, the length of the integrity protection information may include 64 bits and 96 bits. When R is equal to 0, the length of the integrity protection information is 64 bits. When R is equal to 1, the length of the integrity protection information is 96 bits.

In still another example, the identification information is second identification information. The second identification information may be 2 bits, which are any two of the three reserved bits R. For example, reserved bits R1 and R2 are occupied, or reserved bits R2 and R3 are occupied. The two reserved bits RR are defined as 00, 01,10, or 11, and are used to indicate a length of the integrity protection information. For example, the length of the integrity protection information may include 32 bits, 64 bits, 96 bits, and 128 bits. When R is equal to 00, the length of the integrity protection information is 32 bits. When R is equal to 10, the length of the integrity protection information is 96 bits.

In still another example, the identification information is third identification information. The third identification information may be 1 bit, which is any one of the three reserved bits R. The reserved bit R is defined as 0 or 1, and is used to indicate a length of a key used to generate the integrity protection information. For example, the length of the key may include 128 bits and 256 bits. When R is equal to 0, the length of the integrity protection information is 128 bits. When R is equal to 1, the length of the integrity protection information is 256 bits. For another example, the length of the key may include 96 bits and 128 bits. When R is equal to 0, the length of the integrity protection information is 96 bits. When R is equal to 1, the length of the integrity protection information is 128 bits.

In still another example, the identification information is third identification information. The third identification information may be 2 bits, which are any two of the three reserved bits R. For example, reserved bits R1 and R2 are occupied, or reserved bits R1 and R3 are occupied. The two reserved bits RR are defined as 00, 01, 10, or 11, and are used to indicate a length of a key used to generate the integrity protection information. For example, the length of the integrity protection information may include 64 bits, 128 bits, 192 bits, and 256 bits. When R is equal to 00, the length of the integrity protection information is 64 bits. When R is equal to 11, the length of the integrity protection information is 256 bits.

Optionally, the first identification, the second identification, and the third identification information may be newly defined bits in the PDCP data packet.

The identification information is carried in a new field in the PDCP data packet, so as to improve data transmission flexibility.

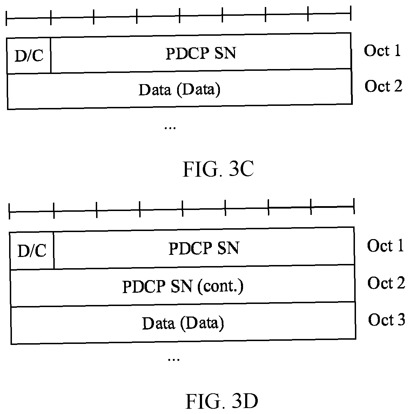

This implementation is applicable to a scenario in which there is no reserved bit in the PDCP data packet. For example, FIG. 3C is a schematic structural diagram of an existing PDCP data packet without a reserved bit. A length of the SN is 7 bits. For another example, FIG. 3D is another schematic structural diagram of an existing PDCP data packet without a reserved bit. A length of the SN is 15 bits. Certainly, this implementation is also applicable to a scenario in which there is a reserved bit in the PDCP data packet.

Optionally, after S203, the data transmission method provided in this embodiment may further include the following step:
S204: The second communications device determines a sending time window. The sending time window is used to indicate that integrity protection needs to be performed on data that is sent by the second communications device to the first communications device within the sending time window.

Specifically, that integrity protection needs to be performed means that the PDCP data packet sent by the second communications device to the first communications device includes the identification information and the integrity protection information. For details, refer to the foregoing descriptions about the identification information and the integrity protection information. Technical principles and technical effects are similar, and details are not described herein again.

By determining the sending time window, the second communications device may perform integrity protection on all data sent within a period of time, thereby reducing complexity of determining whether integrity protection needs to be performed, and further improving data transmission security.

Optionally, that the second communications device determines a sending time window may include:

The second communications device determines at least one of the following: a start time of the sending time window, an end time of the sending time window, and a length of the sending time window.

It should be noted that a specific value of the length of the sending time window is not limited in this embodiment.

Optionally, before S201, the data transmission method provided in this embodiment may further include the following step:

S205: The first communications device determines whether a type of the to-be-sent data or a protocol is a type of data or a protocol included in a target determining policy.

If the type of the to-be-sent data or the protocol is the type of the data or the protocol included in the target determining policy, S201 is performed.

If the type of the to-be-sent data or the protocol is not the type of the data or the protocol included in the target determining policy, the first communications device does not perform integrity protection on the to-be-sent data.

Optionally, the to-be-sent data may include the data carried in the PDCP data packet.

It should be noted that a name and content of the target determining policy are not limited in this embodiment. For example, the target determining policy may also be referred to as an integrity protection determining policy.

Optionally, the type of the data or the protocol included in the target determining policy may include a transport layer security (Transport Layer Security, TLS) type, an internet key exchange protocol (Internet Key Exchange Protocol, IKE) type, and a domain name system (Domain Name System, DNS) related type. Optionally, the IKE type may include an IKEv1 type and an IKEv2 type. Optionally, the data of the DNS type may include a request message, a response message, and a redirection message.

Optionally, the target determining policy may further include the length of the integrity protection information corresponding to the type of the data or the protocol and/or the length of the key used to generate the integrity protection information.

Optionally, before S205, the data transmission method provided in this embodiment may further include:
The first communications device obtains the target determining policy.

Optionally, in an implementation, that the first communications device obtains the target determining policy may include:
The first communications device obtains a locally stored determining policy.

By locally prestoring the determining policy, a manner of obtaining the target determining policy is simple and easy to implement.

It should be noted that content included in the locally stored determining policy is not limited in this embodiment.

Optionally, in another implementation, that the first communications device obtains the target determining policy may include:
The first communications device receives the target determining policy.

In this implementation, the first communications device does not need to determine the target determining policy, but receives the target determining policy from another device, thereby improving flexibility of obtaining the target determining policy.

Optionally, in still another implementation, that the first communications device obtains the target determining policy may include:
The first communications device determines the target determining policy based on at least one obtained determining policy.

In this implementation, the first communications device needs to determine the target determining policy, thereby improving flexibility of obtaining the target determining policy.

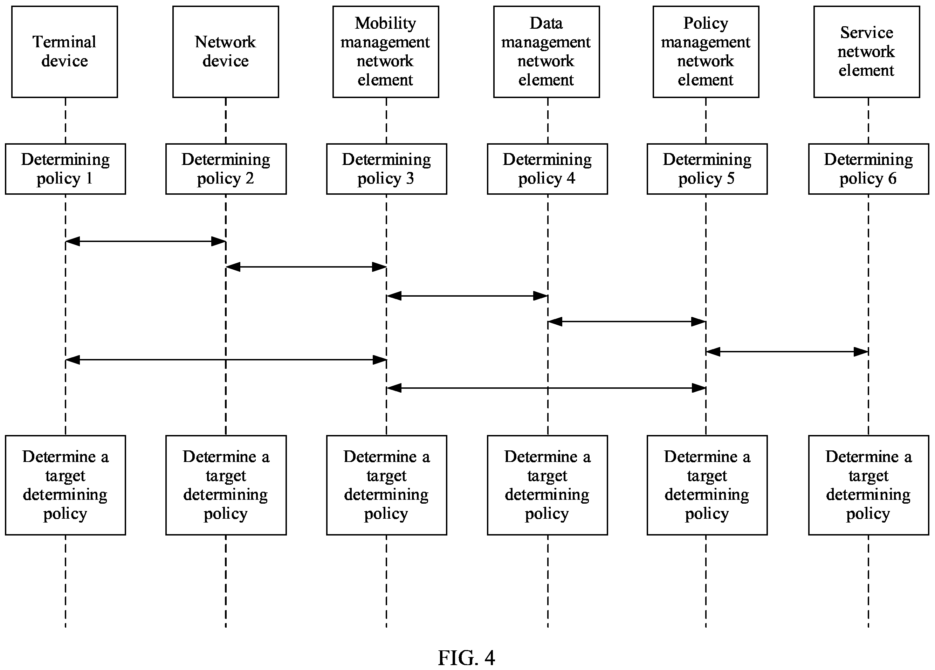

For details, refer to descriptions of the embodiment shown in FIG. 4. Technical principles and technical effects are similar, and details are not described herein.

According to the data transmission method provided in this embodiment, the first communications device generates the PDCP data packet. The PDCP data packet includes the identification information and the integrity protection information. The first communications device sends the PDCP data packet to the second communications device. If the PDCP data packet includes the identification information and the integrity protection information, the second communications device performs, based on the identification information and the integrity protection information, integrity check on the data carried in the PDCP data packet. According to the data transmission method provided in this embodiment, integrity protection is performed on the data carried in the PDCP data packet, and an indication is given by using the identification information, to implement integrity protection on user plane data transmitted through an air interface, thereby improving data transmission security.

FIG. 4 is a flowchart of a data transmission method according to a second embodiment of this application. As shown in FIG. 4, devices in the data transmission method provided in this embodiment include a terminal device, a network device, a mobility management network element, a data management network element, a policy management network element, and a service network element. This embodiment mainly describes how to obtain a target determining policy.

First, related concepts and a communication procedure in this embodiment are described.

### 1. Determining policy and target determining policy

The determining policy is a determining policy that may be prestored in the device in this embodiment, and is used to indicate whether integrity protection needs to be performed on to-be-sent data.

The target determining policy is a final determining policy based on which the terminal device or the network device determines, during data transmission, whether integrity protection needs to be performed on to-be-sent data.

### 2. Determining policy storage

The device in this embodiment may locally prestore a determining policy. Determining policies stored in different devices may be the same or different. In some scenarios, a determining policy may be updated. A time and a manner of updating the determining policy are not limited in this embodiment. The device in this embodiment may store no determining policy.

For ease of distinguishing, names of determining policies stored in different devices are shown in Table 1.

**Table 1**

| Device | Determining policy |
|---|---|
| Terminal device | Determining policy 1 |
| Network device | Determining policy 2 |
| Mobility management network element | Determining policy 3 |
| Data management network element | Determining policy 4 |
| Policy management network element | Determining policy 5 |
| Service network element | Determining policy 6 |

### 3. Determining policy sending and receiving

Each device in this embodiment may send a locally stored determining policy to another device, or may receive a determining policy from another device.

It should be noted that, in this embodiment, "sending" and "receiving" may be implemented through direct communication between two devices, or may be implemented through forwarding by another device. In this way, by receiving a determining policy from another device, each device in this embodiment may obtain determining policies stored in devices other than the another device.

The following provides a description with reference to FIG. 4. In FIG. 4, a double-arrow line between two devices indicates that the two devices can directly communicate with each other.

In an example, the terminal device is used as an example. The terminal device may send the determining policy 1 to the network device or the mobility management network element. The terminal device may receive the determining policy 2 sent by the network device, and receive the determining policy 3 sent by the mobility management network element. The terminal device may receive any one of the determining policy 4 to the determining policy 6 that are forwarded by the network device and the mobility management network element.

In another example, the network device is used as an example. The network device may send the determining policy 2 to the terminal device or the mobility management network element. The network device may receive the determining policy 1 sent by the terminal device, and receive the determining policy 3 sent by the mobility management network element. The network device may receive any one of the determining policy 4 to the determining policy 6 that are forwarded by the mobility management network element. The network device may forward, to the mobility management network element, the determining policy 1 sent by the terminal device.

In still another example, the mobility management network element is used as an example. The mobility management network element may send the determining policy 3 to the terminal device, the network device, the data management network element, or the policy management network element. The mobility management network element may receive the determining policy 1 sent by the terminal device, receive the determining policy 2 sent by the network device, receive the determining policy 4 sent by the data management network element, and receive the determining policy 5 sent by the policy management network element. The mobility management network element may receive the determining policy 1 forwarded by the network device, receive the determining policy 5 and/or the determining policy 6 that are/is forwarded by the data management network element, and receive the determining policy 6 forwarded by the policy management network element. The mobility management network element may forward the determining policy 1 and/or the determining policy 2 to the data management network element or the policy management network element. The mobility management network element may forward any one of the determining policy 4 to the determining policy 6 to the terminal device or the network device.

### 4. Target determining policy determining and transmission

Each device in this embodiment may determine a target determining policy based on at least one obtained determining policy.

A quantity and an obtaining manner of the at least one determining policy are not limited in this embodiment. For example, the at least one determining policy may include at least one of the determining policy 1 to the determining policy 6. For example, the at least one determining policy may be obtained through transmission between the devices shown in Table 1, or may be obtained by a device other than the devices shown in Table 1.

For each device in this embodiment, if the target determining policy is determined by another device, the device may receive the target determining policy sent by the another device.

For each device in this embodiment, if the target determining policy is determined by the device, the device may send the target determining policy to another device.

Optionally, in an implementation, the device in this embodiment may obtain one determining policy. The determining policy is a determining policy stored in the device. The device determines the determining policy as the target determining policy.

The locally stored determining policy is used as the target determining policy, so that a manner of obtaining the target determining policy is simple and easy to implement.

Optionally, in an implementation, the device in this embodiment may obtain N determining policies, and determine the target determining policy based on the N determining policies. Herein, N > 1.

Specifically, the target determining policy is determined based on all the obtained determining policies, so as to avoid additionally obtaining an unnecessary determining policy. For example, if the target determining policy needs to be determined based on the determining policy 1 and the determining policy 2, any one of the determining policy 3 to the determining policy 6 does not need to be obtained. In this implementation, efficiency of determining the target determining policy is improved.

Optionally, in another implementation, the device in this embodiment may obtain N determining policies, and determine the target determining policy based on M determining policies in the N determining policies. Herein, N > 1, M> 0, and N > M.

A manner of determining the target determining policy is not limited herein. For example, an intersection set or a union set of determining policies may be determined as the target determining policy. Alternatively, determining policies have priorities, and a determining policy with a higher priority is determined as the target determining policy. For example, the determining policy 1 and the determining policy 2 are obtained, and if a priority of the determining policy 1 is higher, the determining policy 1 is determined as the target determining policy.

The target determining policy is determined based on some of all the determining policies, so as to improve flexibility of determining the target determining policy.

The following provides a description by using an example.

In an example, the target determining policy is determined by the data management network element, the policy management network element, or the service network element based on at least one of the determining policy 1 to the determining policy 6, and is stored in the data management network element, the policy management network element, or the service network element. In this case, the mobility management network element may obtain the target determining policy. The network device may receive, in an authentication procedure, or a session or bearer establishment procedure, the target determining policy sent by the mobility management network element. The terminal device may receive the target determining policy sent by the mobility management network element by using signaling, or may receive the target determining policy sent by the network device.

In another example, the target determining policy is determined by the mobility management network element based on at least one of the determining policy 1 to the determining policy 6, and is stored in the mobility management network element. The network device may receive, in an authentication procedure, or a session or bearer establishment procedure, the target determining policy sent by the mobility management network element. The terminal device may receive the target determining policy sent by the mobility management network element by using signaling, or may receive the target determining policy sent by the network device.

In still another example, the target determining policy is determined by the network device based on at least one of the determining policy 1 to the determining policy 6, and is stored in the network device. The terminal device may receive the target determining policy sent by the network device.

In still another example, the target determining policy is determined by the terminal device based on at least one of the determining policy 1 to the determining policy 6, and is stored in the terminal device. The network device may receive the target determining policy sent by the terminal device.

The data transmission method provided in this embodiment specifically provides implementations of obtaining or determining the target determining policy by the terminal device, the network device, the mobility management network element, the data management network element, the policy management network element, and the service network element. The data transmission method provided in this embodiment improves flexibility of determining the target determining policy.

An embodiment of this application further provides an integrity protection key generation method. The integrity protection key generation method provided in this embodiment may be executed by a communications device. The communications device may include a terminal device or a network device.

When the communications device is used as a transmit end device to perform integrity protection on to-be-sent data, or when the communications device is used as a receive end device to perform integrity check on received data, key derivation needs to be performed. An algorithm distinguisher (Algorithm distinguisher) parameter needs to be used for key derivation. For example, Table 2 shows names and values of existing algorithm distinguisher parameters. As shown in Table 2, there are six algorithm distinguisher parameters that define algorithm distinguisher parameters for non-access stratum (Non-access stratum, NAS), radio resource control (Radio Resource Control, RRC), and user plane (User plane, UP) encryption and integrity protection. The algorithm distinguisher parameter NAS-enc-alg has the value of 0x01, and is used to distinguish a NAS encryption key. The algorithm distinguisher parameter NAS-int-alg has the value of 0x02, and is used to distinguish a NAS integrity protection key. The algorithm distinguisher parameter RRC-enc-alg has the value of 0x03, and is used to distinguish an RRC encryption key. The algorithm distinguisher parameter RRC-int-alg has the value of 0x04, and is used to distinguish an RRC integrity protection key. The algorithm distinguisher parameter UP-enc-alg has the value of 0x05, and is used to distinguish a user plane encryption key. The algorithm distinguisher parameter UP-int-alg has the value of 0x06, and is used to distinguish a user plane integrity protection key. Currently, a user plane integrity protection key derived based on a user plane integrity protection identifier (that is, UP-int-alg with the value of 0x06) may be used in a 4G relay scenario.

**Table 2**

| Algorithm distinguisher parameter | Value |
|---|---|
| NAS-enc-alg | 0x01 |
| NAS-int-alg | 0x02 |
| RRC-enc-alg | 0x03 |
| RRC-int-alg | 0x04 |
| UP-enc-alg | 0x05 |
| UP-int-alg | 0x06 |

The data transmission method shown in FIG. 2 to FIG. 4 in this application may be applied to a scenario of user plane integrity protection on common data. To distinguish between a scenario of user plane integrity protection in the 4G relay scenario and the scenario of user plane integrity protection on common data, a new algorithm distinguisher parameter is defined in the embodiments of this application. For example, Table 3 shows the newly defined algorithm distinguisher parameter UP-RN-int-alg and a value thereof.

**Table 3**

| Algorithm distinguisher parameter | Value |
|---|---|
| NAS-enc-alg | 0x01 |
| NAS-int-alg | 0x02 |
| RRC-enc-alg | 0x03 |
| RRC-int-alg | 0x04 |
| UP-enc-alg | 0x05 |
| UP-int-alg | 0x06 |
| UP-RN-int-alg | 0x07 |

The following provides a description by using an example.

In an example, the algorithm distinguisher parameter UP-RN-int-alg is used for key derivation in the 4G relay scenario, and has the value of 0x07. The algorithm distinguisher parameter UP-int-alg is used for key derivation in the scenario of user plane integrity protection on common data, and has the value of 0x06.

In another example, the algorithm distinguisher parameter UP-int-alg is used for key derivation in the 4G relay scenario, and has the value of 0x06. The algorithm distinguisher parameter UP-RN-int-alg is used for key derivation in the scenario of user plane integrity protection on common data, and has the value of 0x07.

It can be learned that different values of algorithm distinguisher parameters may be used to distinguish between different application scenarios. Different algorithm distinguisher parameters may be used to perform key derivation for user plane data integrity protection.

It should be noted that a name and a specific value of the newly defined algorithm distinguisher parameter is not limited in this embodiment. For example, the algorithm distinguisher parameter UP-RN-int-alg in Table 3 may have a value of 0x08.

It should be noted that the foregoing embodiments are merely specific embodiments of this application, and do not constitute a limitation on the scope of this application. The embodiments provided in this application may be combined with each other.

For all the foregoing embodiments, the solutions are described by using the PDCP protocol as an example. A protocol name and a supportable protocol are not limited in this application. Any communications protocol in which whether integrity protection is performed needs to be indicated may be indicated and protected by using the embodiments of this application.

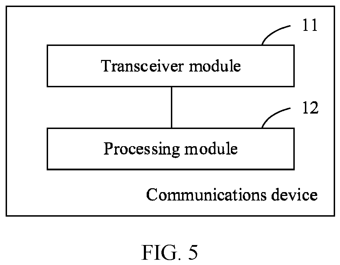

FIG. 5 is a schematic structural diagram of a communications device according to a first embodiment of this application. As shown in FIG. 5, the communications device provided in this embodiment may include a transceiver module 11 and a processing module 12. The communications device provided in this embodiment may perform the operations performed by the first communications device, the second communications device, the communications device, the terminal device, the network device, the mobility management network element, the data management network element, the policy management network element, or the service network element in the foregoing method embodiments. Specific implementations and technical effects are similar, and details are not described herein again.

In some implementations, the communications device shown in FIG. 5 is used as the first communications device, and is configured to perform the operations performed by the first communications device in the embodiments shown in FIG. 2 to FIG. 4. Specific implementations and technical effects are similar, and details are not described herein again.

The processing module 12 is configured to perform integrity protection on to-be-sent data, to generate a packet data convergence protocol PDCP data packet. The PDCP data packet includes identification information and integrity protection information. The identification information is at least used to indicate that integrity protection is performed on data carried in the PDCP data packet. The integrity protection information is used to perform integrity check on the data carried in the PDCP data packet.

The transceiver module 11 is configured to send the PDCP data packet.

Optionally, the identification information includes at least one of the following: first identification information, second identification information, and third identification information.

The first identification information is used to indicate that integrity protection is performed on the data carried in the PDCP data packet.

The second identification information is used to indicate a length of the integrity protection information.

The third identification information is used to indicate a length of a key used to generate the integrity protection information.

Optionally, the identification information is included in a reserved field in the PDCP data packet, or the identification information is included in a new field in the PDCP data packet.

Optionally, the processing module 12 is further configured to:
determine, based on an integrity protection determining policy, that a type of the to-be-sent data is a type of data on which integrity protection needs to be performed.

Optionally, the integrity protection determining policy is a locally prestored determining policy; or
the integrity protection determining policy is received by the transceiver module 11 from another device in a communications system; or
the integrity protection determining policy is determined by the processing module 12 based on at least one determining policy, where the at least one determining policy includes at least one of the following: a locally prestored determining policy and a determining policy prestored in another device in a communications system.

Optionally, the processing module 12 is specifically configured to:
perform integrity protection on the to-be-sent data; or
perform integrity protection on the to-be-sent data and the identification information.

In some implementations, the communications device shown in FIG. 5 is used as the second communications device, and is configured to perform the operations performed by the second communications device in the embodiments shown in FIG. 2 to FIG. 4. Specific implementations and technical effects are similar, and details are not described herein again.

The transceiver module 11 is configured to receive a packet data convergence protocol PDCP data packet.

The processing module 12 is configured to: if the PDCP data packet includes identification information and integrity protection information, perform, based on the identification information and the integrity protection information, integrity check on data carried in the PDCP data packet. The identification information is at least used to indicate that integrity protection is performed on the data carried in the PDCP data packet, and the integrity protection information is used to perform integrity check on the data carried in the PDCP data packet.

Optionally, the processing module 12 is further configured to
determine a sending time window, where the sending time window is used to indicate that integrity protection needs to be performed on data that is sent to a first device within the sending time window, and the first device is a device sending the PDCP data packet.

Optionally, the identification information includes at least one of the following: first identification information, second identification information, and third identification information.

The first identification information is used to indicate that integrity protection is performed on the data carried in the PDCP data packet.

The second identification information is used to indicate a length of the integrity protection information.

The third identification information is used to indicate a length of a key used to generate the integrity protection information.

Optionally, the identification information is included in a reserved field in the PDCP data packet, or the identification information is included in a new field in the PDCP data packet.

Optionally, the processing module 12 is specifically configured to:
perform integrity check on the data carried in the PDCP data packet; or
perform integrity check on the data carried in the PDCP data packet and the identification information.

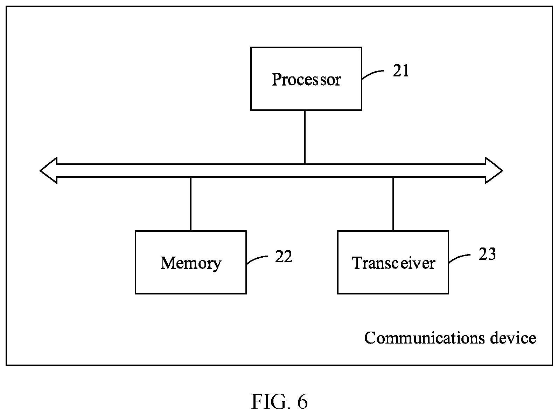

FIG. 6 is a schematic structural diagram of a communications device according to a second embodiment of this application. As shown in FIG. 6, the communications device includes a processor 21, a memory 22, and a transceiver 23. The memory 22 is configured to store an instruction. The transceiver 23 is configured to communicate with another device. The processor 21 is configured to execute the instruction stored in the memory 22, so that the communications device performs the operations performed by the first communications device, the second communications device, the communications device, the terminal device, the network device, the mobility management network element, the data management network element, the policy management network element, or the service network element in the foregoing method embodiments. Specific implementations and technical effects are similar, and details are not described herein again.

It should be noted and understood that division of the modules of the foregoing apparatus is merely logic function division. During actual implementation, some or all modules may be integrated into one physical entity, or the modules may be physically separated. The modules may be all implemented in a form of software invoked by a processing element, or may be all implemented in a form of hardware. Alternatively, some modules may be implemented in a form of software invoked by a processing element, and some modules are implemented in a form of hardware. For example, a determining module may be a processing element separately disposed, or may be integrated in a chip of the foregoing apparatus for implementation. In addition, the determining module may alternatively be stored in the memory of the foregoing apparatus in a form of program code, and is invoked by a processing element of the foregoing apparatus to perform a function of the determining module. Implementations of other modules are similar to the implementation of the determining module. In addition, all or some of the modules may be integrated together, or may be implemented independently. The processing element may be an integrated circuit and has a signal processing capability. In an implementation process, steps in the foregoing methods or the foregoing modules can be implemented by using a hardware integrated logical circuit in the processing element, or by using instructions in a form of software.

For example, the foregoing modules may be configured as one or more integrated circuits for implementing the foregoing method, such as one or more application-specific integrated circuits (application specific integrated circuit, ASIC), one or more microprocessors (digital signal processor, DSP), or one or more field programmable gate arrays (field programmable gate array, FPGA). For another example, when one of the foregoing modules is implemented in a form of scheduling program code by a processing element, the processing element may be a general-purpose processor, such as a central processing unit (central processing unit, CPU) or another processor that can invoke the program code. For another example, the modules may be integrated together, and implemented in a form of a system-on-a-chip (system-on-a-chip, SOC).

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like.

## Claims

1. A data transmission method, comprising:
performing integrity protection on to-be-sent data, to generate a packet data convergence protocol PDCP data packet, wherein the PDCP data packet comprises identification information and integrity protection information, the identification information is at least used to indicate that integrity protection is performed on data carried in the PDCP data packet, and the integrity protection information is used to perform integrity check on the data carried in the PDCP data packet; and
sending the PDCP data packet.

2. The method according to claim 1, wherein the identification information comprises at least one of the following:
first identification information, second identification information, and third identification information, wherein
the first identification information is used to indicate that integrity protection is performed on the data carried in the PDCP data packet;
the second identification information is used to indicate a length of the integrity protection information; and
the third identification information is used to indicate a length of a key used to generate the integrity protection information.

3. The method according to claim 1, wherein the identification information is comprised in a reserved field in the PDCP data packet, or the identification information is comprised in a new field in the PDCP data packet.

4. The method according to any one of claims 1 to 3, wherein before the performing integrity protection on to-be-sent data, to generate a PDCP data packet, the method further comprises:
determining, based on an integrity protection determining policy, that a type of the to-be-sent data is a type of data on which integrity protection needs to be performed.

5. The method according to claim 4, wherein
the integrity protection determining policy is a locally prestored determining policy; or
the integrity protection determining policy is received from another device in a communications system; or
the integrity protection determining policy is determined based on at least one determining policy, wherein the at least one determining policy comprises at least one of the following: a locally prestored determining policy and a determining policy prestored in another device in a communications system.

6. The method according to any one of claims 1 to 3, wherein the performing integrity protection on to-be-sent data comprises:
performing integrity protection on the to-be-sent data; or
performing integrity protection on the to-be-sent data and the identification information.

7. A data transmission method, comprising:
receiving a packet data convergence protocol PDCP data packet; and
if the PDCP data packet comprises identification information and integrity protection information, performing, based on the identification information and the integrity protection information, integrity check on data carried in the PDCP data packet, wherein the identification information is at least used to indicate that integrity protection is performed on the data carried in the PDCP data packet, and the integrity protection information is used to perform integrity check on the data carried in the PDCP data packet.

8. The method according to claim 7, further comprising
determining a sending time window, wherein the sending time window is used to indicate that integrity protection needs to be performed on data that is sent to a first device within the sending time window, and the first device is a device sending the PDCP data packet.

9. The method according to claim 7 or 8, wherein the identification information comprises at least one of the following: first identification information, second identification information, and third identification information, wherein
the first identification information is used to indicate that integrity protection is performed on the data carried in the PDCP data packet;
the second identification information is used to indicate a length of the integrity protection information; and
the third identification information is used to indicate a length of a key used to generate the integrity protection information.

10. The method according to claim 7 or 8, wherein the identification information is comprised in a reserved field in the PDCP data packet, or the identification information is comprised in a new field in the PDCP data packet.

11. The method according to claim 7 or 8, wherein the performing integrity check on data carried in the PDCP data packet comprises:
performing integrity check on the data carried in the PDCP data packet; or
performing integrity check on the data carried in the PDCP data packet and the identification information.

12. A communications device, comprising:
a processor, configured to perform integrity protection on to-be-sent data, to generate a packet data convergence protocol PDCP data packet, wherein the PDCP data packet comprises identification information and integrity protection information, the identification information is at least used to indicate that integrity protection is performed on data carried in the PDCP data packet, and the integrity protection information is used to perform integrity check on the data carried in the PDCP data packet; and
a transceiver, configured to send the PDCP data packet.

13. The communications device according to claim 12, wherein the identification information comprises at least one of the following: first identification information, second identification information, and third identification information, wherein
the first identification information is used to indicate that integrity protection is performed on the data carried in the PDCP data packet;
the second identification information is used to indicate a length of the integrity protection information; and
the third identification information is used to indicate a length of a key used to generate the integrity protection information.

14. The communications device according to claim 12, wherein the identification information is comprised in a reserved field in the PDCP data packet, or the identification information is comprised in a new field in the PDCP data packet.

15. The communications device according to any one of claims 12 to 14, wherein the processor is further configured to:
determine, based on an integrity protection determining policy, that a type of the to-be-sent data is a type of data on which integrity protection needs to be performed.

16. The communications device according to claim 15, wherein
the integrity protection determining policy is a locally prestored determining policy; or
the integrity protection determining policy is received by the transceiver from another device in a communications system; or
the integrity protection determining policy is determined by the processor based on at least one determining policy, wherein the at least one determining policy comprises at least one of the following: a locally prestored determining policy and a determining policy prestored in another device in a communications system.

17. The communications device according to any one of claims 12 to 14, wherein the processor is specifically configured to:
perform integrity protection on the to-be-sent data; or
perform integrity protection on the to-be-sent data and the identification information.

18. A communications device, comprising:
a transceiver, configured to receive a packet data convergence protocol PDCP data packet; and
a processor, configured to: if the PDCP data packet comprises identification information and integrity protection information, perform, based on the identification information and the integrity protection information, integrity check on data carried in the PDCP data packet, wherein the identification information is at least used to indicate that integrity protection is performed on the data carried in the PDCP data packet, and the integrity protection information is used to perform integrity check on the data carried in the PDCP data packet.

19. The communications device according to claim 18, wherein the processor is further configured to
determine a sending time window, wherein the sending time window is used to indicate that integrity protection needs to be performed on data that is sent to a first device within the sending time window, and the first device is a device sending the PDCP data packet.

20. The communications device according to claim 18 or 19, wherein the identification information comprises at least one of the following: first identification information, second identification information, and third identification information, wherein
the first identification information is used to indicate that integrity protection is performed on the data carried in the PDCP data packet;
the second identification information is used to indicate a length of the integrity protection information; and
the third identification information is used to indicate a length of a key used to generate the integrity protection information.

21. The communications device according to claim 18 or 19, wherein the identification information is comprised in a reserved field in the PDCP data packet, or the identification information is comprised in a new field in the PDCP data packet.

22. The communications device according to claim 18 or 19, wherein the processor is specifically configured to:
perform integrity check on the data carried in the PDCP data packet; or
perform integrity check on the data carried in the PDCP data packet and the identification information.
